# EUROPÄISCHE PATENTANMELDUNG

(11) **EP 3 686 003 A1**
(43) Veröffentlichungstag der Anmeldung: **29.07.2020**
(21) Anmeldenummer: 20000032.1
(22) Anmeldetag: 21.01.2020
(51) Int. Cl.: B32B 7/12, B32B 3/12, B32B 3/26, B32B 5/02, B32B 7/04, B32B 37/14, B32B 37/10, B32B 37/15, B32B 37/16, B32B 37/18, B32B 37/20, B32B 38/00, B32B 27/06, B32B 27/08, B32B 27/12, C09J 7/00

(54) **VERBUNDLEICHTBAUPLATTE UND VERFAHREN ZU DEREN HERSTELLUNG**

(30) Priorität: 23.01.2019 DE 102019000414
(71) Anmelder: Isel Facility GmbH & Co. KG, 13627 Berlin-Charlottenburg (DE)
(72) Erfinder: SAAL, Rene, D-36132 Eiterfeld (DE)
(74) Vertreter: Weihrauch, Frank

(57) **Zusammenfassung**

Die Erfindung betrifft eine Verbundleichtbauplatte (1), aufweisend eine Basisschicht (2), eine Verbindungsschicht (3) und eine Deckschicht (4), wobei die Basisschicht (2) durch ein Leichtbauplattenmaterial ausgebildet wird, wobei die Deckschicht (4) durch ein CPL-Material ausgebildet wird, wobei die Verbindungsschicht (3) durch eine erstarrte Schmelzfolie ausgebildet wird,und wobei die Verbindungsschicht (3) die Basisschicht (2) mit der Deckschicht (4) stoffschlüssig verbindet. Ferner betrifft die Erfindung ein Verfahren zur Herstellung einer solchen Verbundleichtbauplatte in einem Quasi-Endlosverfahren.

## Beschreibung

Die Erfindung betrifft eine Verbundleichtbauplatte und ein Verfahren zu deren Herstellung.

Aus dem Stand der Technik sind Leichtbaumaterialien beispielsweise mit Wabenstrukturen bekannt.
DE 196 06 195 A1 beschreibt verschiedene Materialien für eine faltbare Wabenstruktur und deren Verwendung in Materialverbunden.
Weiterhin ist es bekannt, HPL (High Pressure Laminate) - Materialien als Deckschicht auf Materialverbunde mit Wabenstrukturmittelschichten aufzukleben.

Die Aufgabe der Erfindung ist es, eine stabile Verbundleichtbauplatte mit vorteilhaften Eigenschaften anzugeben, die mit einfachen und kostengünstigen Mitteln herzustellen ist. Ferner ist es die Aufgabe der Erfindung, ein Verfahren zur Herstellung einer solchen Verbundleichtbauplatte aufzuzeigen.

Die Aufgabe wird in Bezug auf die Verbundleichtbauplatte durch die in dem Patentanspruch 1 aufgeführten Merkmale gelöst. Bevorzugte Weiterbildungen ergeben sich aus den auf den Patentanspruch 1 zurückbezogenen Unteransprüchen. Ferner wird in Bezug auf das Verfahren zur Herstellung die Aufgabe durch die in dem Patentanspruch 5 aufgeführten Merkmale gelöst. Bevorzugte Weiterbildungen ergeben sich aus den auf den Patentanspruch 5 zurückbezogenen Unteransprüchen.

Erfindungsgemäß weist die Verbundleichtbauplatte eine Basisschicht, eine Verbindungsschicht und eine Deckschicht auf.

Die Basisschicht wird erfindungsgemäß durch ein Leichtbauplattenmaterial ausgebildet. Das Leichtbauplattenmaterial weist vorzugweise eine geringe Dichte auf. Das Leichtbauplattenmaterial kann als ein Vollmaterial mit geringer Dichte (beispielsweise organische Polymere), als Material mit Hohlstrukturen (beispielsweise Geflechte, Falten, Waben) oder als Material mit hoher Materialporosität (beispielsweise Materialschäume, expandierte Polymere) vorliegen.

Erfindungsgemäß wird die Deckschicht als CPL (Continuous Pressure Laminate) - Material ausgebildet.

Die Verbindungsschicht wird erfindungsgemäß durch eine erstarrte Schmelzfolie ausgebildet. Die Verbindungsschicht besteht somit aus einer thermoplastischen Folie, welche beim Erhitzen auf- oder anschmilzt und vorzugsweise die Basisschicht und die Deckschicht gut benetzt.

Erfindungsgemäß verbindet die Verbindungsschicht die Basisschicht mit der Deckschicht stoffschlüssig. Hierbei haftet die Schmelzfolie nach deren Erstarren basisschichtseitig an der Oberfläche des Leichtbauplattenmaterials und deckschichtseitig an der rückseitigen Oberfläche des CPL-Materials. Es wurde überraschend gefunden, dass mittels einer Schmelzfolie ein zuverlässiger, zug- und scherkraftfester Verbund zwischen dem Leichtbauplattenmaterial und einem CPL-Material herstellbar ist.

Das Material der Schmelzfolie ist vorzugsweise so beschaffen, dass es sich mit den Oberflächen des Leichtbauplattenmaterial und des CPL-Materials möglichst auch chemisch vebindet. Dies erhöht die Festigkeit der stofffesten Verbindung nach dem Aushärten.

Die erfindungsgemäße Verbundleichtbauplatte weist insbesondere nachfolgende Vorteile auf.
CPL-Materialien weisen besonders hohe Oberflächengüten auf. Zudem ermöglicht die erfindungsgemäße Verbundleichtbauplatte mit einer CPL-Deckschicht eine besonders wirtschaftliche Herstellbarkeit. Dies beruht auf einer besseren Verarbeitbarkeit im Vergleich zu HPL-Materialien. Insbesondere kann ein CPL-Material vorteilhaft zu Vorratsrollen gerollt werden und steht somit für einen Quasi-Endlosfertigungsprozess zur Verfügung. Im Vergleich zu HPL-Materialien sind CPL-Materialien für Verbundleichtbauplatten zudem bei einer geringeren Stärke verwendbar. Weiterhin ist es vorteilhaft, dass die erstarrte Schmelzfolie als Verbindungsschicht eine stoffschlüssige Verbindung nicht auf der Basis freiwerdender Lösungsmittel bereitstellt. Damit geht auch der Vorteil einher, dass die erfindungsgemäße Verbundleichtbauplatte frei von sukzessiven Ausdünstungen ist. Insbesondere ist die Verbundleichtbauplatte frei von Formaldehyd-Emissionen. Damit ist die Verbundleichtbauplatte nicht nur für Außenanwendungen, sondern unbedenklich auch für Innenraumanwendungen besonders geeignet.

Durch die lösungsmittelfreie verschmelzende Verbindung ist die erfindungsgemäße Verbundleichtbauplatte zudem unempfindlich gegen ein Aufquellen bei Feuchtigkeitsumgebung.

Ein weiterer Vorteil besteht in der guten Recyclingfähigkeit der erfindungsgemäßen Verbundleichtbauplatte. Die CPL-Deckschicht kann sehr dünn ausgebildet werden und bewirkt damit keine erhebliche Verunreinigung eines geschredderten Materials der Basisschicht und der Verbindungsschicht. Zudem kann das CPL-Material technologisch unaufwändig von dem geschredderten Material der Basisschicht und der Verbindungsschicht separiert werden.

Ein weiterer Vorteil besteht darin, dass die Verbindung von Basisschicht und Deckschicht mittels einer Schmelzfolie im Gegensatz zu einer sonst üblichen lösungsmittelbasierten Verklebung sofort mit der Erstarrung und somit sehr schnell erreicht wird. Damit kann das Herstellungsverfahren besonders schnell ausgeführt werden, wodurch Zeit und Kosten eingespart werdeo können.

Ferner ist es vorteilhaft, dass die erfindungsgemäße Verbundleichtbauplatte unempfindlich gegenüber kochendem Wasser ist. Die Erstarrungstemperatur der Schmelzfolie ist auf Temperaturen von deutlich über 100 Grad Celsius einstellbar. Damit kann die Verbundleichtbauplatte problemlos desinfiziert werden. Sie eignet sich in besonderer Weise auch für Anwendungen mit erhöhten hygienischen Anforderungen.

Gemäß einer vorteilhaften Weiterbildung ist das Leichtbauplattenmaterial als Wabenplatte mit quer zu der Deckschicht angeordneten Strukturstegen ausgebildet. Durch eine Hohlstrukturierung des Leichtbauplatennmaterials in einer Wabenform kann vorteilhaft das Gewicht der Basisschicht weiter reduziert werden. Es wurde mit der Schmelzfolie ein vorteilhafter Weg gefunden, eine zuverlässige stoffschlüssige Verbindung herzustellen, obwohl basisschichtseitig lediglich die Begrenzungskanten der Strukturstege zur Verfügung stehen.

Die Schmelzfolie weist gemäß einer vorteilhaften Weiterbildung eine Perforation auf. Es wurde überraschend gefunden, dass eine Perforation der Schmelzfolie das Aufbringen auf die Wabenstruktur der Basisschicht und das spätere Verbinden mit der Deckschicht erleichtert und die Festigkeit des Verbunds erheblich verbessert. Dies beruht darauf, dass bei einem Aufbringen der Schmelzfolie auf die Wabenstruktur wie auch auf die Deckschicht eingeschlossenes oder sich bildendes Gas entweichen kann, was ein Beulen in der Schmelzfolie verhindert. Wird die Deckschicht aufgebracht, werden Blasen zwischen Verbindungsschicht und Deckschicht verhindert. Im Ergebnis wird eine bessere stoffschlüssige Verbindung zwischen der - Schmelzfolie und der Basisschicht wie auch der Deckschicht erreicht.

Gemäß einer vorteilhaften Weiterbildung weist die Verbundleichtbauplatte eine weitere Verbindungsschicht und eine weitere Deckschicht auf.

Die weitere Verbindungsschicht und die weitere Deckschicht sind gemäß dieser vorteilhaften Weiterbildung an dem Leichtbauplattenmaterial der Basisschicht sowie gegenüberliegend zu der Verbindungsschicht und der Deckschicht angeordnet. Somit weist das Leichtbauplattenmaterial beidseitig eine Beschichtung auf. Die Beschichtung der Basisschicht kann vorteilhaft gleichzeitig auf beiden Seiten durchgeführt werden.
Die Deckschicht und die weitere Deckschicht werden nachfolgend zusammengefasst auch als die Deckschichten bezeichnet. Die Verbindungsschicht und die weitere Verbindungsschicht werden nachfolgend zusammengefasst auch als die Verbindungsschichten bezeichnet.

Die weitere Deckschicht wird gemäß einer vorteilhaften Weiterbildung aus CPL-Material ausgebildet. Die weitere Verbindungsschicht ist gemäß einer vorteilhaften Weiterbildung durch eine erstarrte Schmelzfolie ausgebildet. Die weitere Verbindungsschicht verbindet gemäß einer vorteilhaften Weiterbildung die Basisschicht und die weitere Deckschicht stoffschlüssig.

Das erfindungsgemäße Verfahren zur Herstellung einer Verbundleichtbauplatte betrifft eine Verbundleichtbauplatte, welche eine Basisschicht, eine Verbindungsschicht und eine Deckschicht aufweist. Die Basisschicht wird erfindungsgemäß durch ein Leichtbauplattenmaterial ausgebildet. Erfindungsgemäß wird die Deckschicht als CPL-Material und die Verbindungsschicht durch eine erstarrte Schmelzfolie ausgebildet. Erfindungsgemäß verbindet die Verbindungsschicht die Basisschicht mit der Deckschicht stoffschlüssig.

Das Verfahren weist-erfindungsgemäß folgende Verfahrensschritte auf:
a) Durchführen eines Rollauftrags der Schmelzfolie auf die Basisschicht
b) Durchführen eines Rollauftrags der Deckschicht auf die rollaufgetragene Schmelzfolie
c) Durchführen einer Wärmebeaufschlagung der Schmelzfolie
d) Durchführen einer flächigen Druckbeaufschlagung
e) Abwarten einer Erstarrung der Schmelzfolie bis zum Entritt der stoffschlüssigen Verbindung und Erhalt einer Roh-Verbundleichtbauplatte als Endlosmaterial

Im Verfahrensschritt a) wird die Verbindungsschicht, also die Schmelzfolie, auf die Basisschicht aufgetragen. Dies geschieht durch das Abrollen der Schmelzfolie von einer entsprechenden Vorratsrolle. Das Auftragen kann durch Führungselemente unterstützt werden.

Als Rollauftrag im Sinne der vorliegenden Anmeldung wird das Auftragen eines folienartigen flächigen Werkstoffs auf einen anderen flächigen Werkstoff in einem kontinuierlichen Prozess verstanden.

Im Verfahrensschritt b) wird die Deckschicht auf die Schmelzfolie aufgetragen. Dies geschieht ebenfalls vorzugsweise durch das Abrollen der Deckschicht von einer Vorratsrolle. Die Verfahrensschritte a) und b) können separat, aber auch simultan erfolgen.

Im Verfahrensschritt c) wird die Schmelzfolie mit einer thermischen Energie beaufschlagt, welche die Schmelzfolie erweichen lässt. Die Wärmebeaufschlagung kann beispielsweise durch ein Heißluftgebläse erfolgen.

Im Verfahrensschritt d) wird die Deckschicht flächig mit einem mechanischen Druck beaufschlagt. Dies ist in einem kontinuierlichen Verfahren, vorzugsweise mit einer Walze oder einer Presse möglich. Die Walze ist vorzugsweise beheizt, wodurch Verfahrensschritt c) zeitgleich mit Verfahrensschritt d) erfolgen kann, was einem Abkühlen der Schmelzfolie nach dem Verfahrensschritt c) entgegenwirkt. Durch eine Beheizung der Walze kann ebenfalls ein zu schnelles Abkühlen der Folie während des Pressens verhindert werden.

In Verfahrensschritt e) wird bis zur Erstarrung der Schmelzfolie gewartet, wodurch sich die stoffschlüssige Verbindung ausbildet. Das Erstarren kann durch ein Kaltluftgebläse oder eine gekühlte Walze unterstützt werden. Durch den kontinuierlich geführten Prozess entsteht vorzugsweise eine Roh-Verbundleichtbauplatte als Endlosmaterial, welche dann noch zur Verbundleichtbauplatte zugeschnitten werden kann.

Gemäß einer vorteilhaften Weiterbildung weist das Verfahren einen zusätzlichen Verfahrensschritt f) auf, welcher ein Zuschneiden der Roh-Verbundleichtbauplatte zu der Verbundleichtbauplatte umfasst. Das Zuschneiden kann vorzugsweise durch Sägen, Fräsen, Scheren oder Wasserstrahlschneiden erfolgen.

Das Verfahren umfasst gemäß einer vorteilhaften Weiterbildung die zusätzlichen Verfahrensschritte g), h) und i).

Diese sind ähnlich oder gleich zu den Verfahrensschritten a) bis c) ausgebildet; sie beziehen sich jedoch auf die gegenüberliegende Seite der Basisschicht. Zeitlich erfolgen sie vor dem Verfahrensschritt d), welcher beide Seiten vorzugsweise gleichzeitig verpresst. Hierzu ist beispielsweise eine Anordnung von zwei beheizten Walzen möglich.

Der Verfahrenschritt g) beinhaltet gemäß einer vorteilhaften Weiterbildung ein Durchführen eines Rollauftrags der weiteren Schmelzfolie auf die Basisschicht. In diesem Verfahrensschritt wird eine weitere Schmelzfolie ähnlich a) auf die gegenüberliegende Seite der Basisschicht aufgetragen.

Der Verfahrensschritt h) beinhaltet gemäß einer vorteilhaften Weiterbildung ein Durchführen eines Rollauftrags der weiteren Deckschicht auf die rollaufgetragene Schmelzfolie. In diesem Verfahrensschritt wird eine weitere Deckschicht ähnlich b) auf die Schmelzfolie der gegenüberliegenden Seite aufgetragen.

Der Verfahrensschritt i) beinhaltet gemäß einer vorteilhaften Weiterbildung ein Durchführen einer Wärmebeaufschlagung der weiteren Schmelzfolie. Dies erfolgt wie in Verfahrensschritt c) beispielsweise durch ein Heißluftgebläse.

Ein besonderer Vorteil des beschriebenen Verfahrens gegenüber des aus dem Stand der Technik bekannten Verfahrens mit HPL-Platten ist die Möglichkeit eines kontinuierlichen Prozesses.
Durch den kontinuierlichen Prozess sind geringere Produktionszeiten bei einer besseren Kosteneffizienz möglich.

Ein weiterer Vorteil ist die hohe Güte der erzeugten Oberflächen. Zudem besteht der Vorteil, dass mittels der Schmelzfolie lösemittelfrei und ausschließlich mit Feststoffen, nämlich Plattenmaterial und Folien, produziert wird.

Die Erfindung wird als Ausführungsbeispiel anhand von.
- Fig. 1: Verbundleichtbauplatte Seitenansicht (Verfahren)
- Fig. 2: Verbundleichtbauplatte Draufsicht
näher erläutert.

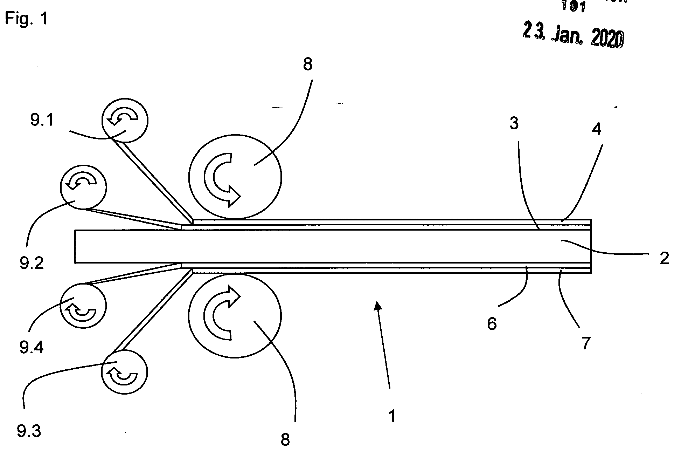

Figur 1 zeigt ein Ausführungsbeispiel einer Verbundleichtbauplatte sowie zugleich das Verfahren zur Herstellung der Verbundleichtbauplatte 1 an einem Ausführungsbeispiel in einer schematischen Seitenansicht.

Die Verbundleichtbauplatte 1 besteht aus einer Basisschicht 2, ausgebildet als Wabenplatte, einer Verbindungsschicht 3, ausgebildet als Schmelzfolie, einer Deckschicht 4, ausgebildet als CPL-Material sowie einer weiteren Verbindungsschicht 6, ebenfalls ausgebildet als Schmelzfolie und einer weiteren Deckschicht 7, ebenfalls ausgebildet als CPL-Material.

Die Verfahrensschritte a) und g) sowie b) und h) werden im Ausführungsbeispiel simultan durchgeführt. Es werden als Verfahrensschritte a) und b) auf beiden Seiten der Basisschicht 2 zuerst die beiden Verbindungsschichten 3, 6 aufgetragen. Die Verbindungsschichten 3, 6 bestehen aus jeweils einer Schmelzfolie, welche von Vorratsrollen 9.2 und 9.4 aufgetragen werden. Danach werden die beiden Deckschichten 4, 7 auf die Verbindungsschichten 3, 6 von Vorratsrollen 9.1 und 9.3 aufgetragen.
Die Wärmebehandlung als Verfahrensschritte c) und i) erfolgen zeitgleich mit dem Verpressen als Verfahrensschritt d). Diese Verfahrensschritte werden durch zwei beheizte und gegeneinander drückende Walzen durchgeführt. Die Walzen liefern in dieser Ausführung auch die Kraft für den linearen Vorschub.

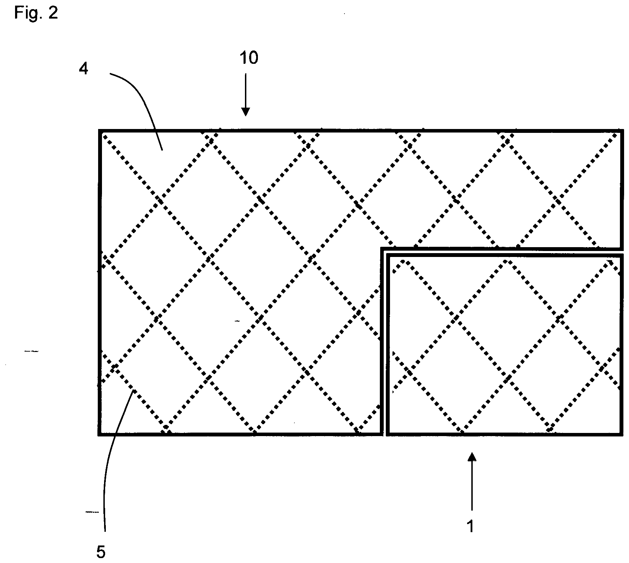

In Figur 2 ist die Verbundleichtbauplatte 1 in einer Draufsicht dargestellt. Die innenliegenden Strukturstege 5, welche die Wabenstruktur bilden, sind gestrichelt dargestellt. Die Deckschichten 4 begrenzen die Roh-Verbundleichtbauplatte 10. Aus dieser ist eine Verbundleichtbauplatte 1 herausgeschnitten.

### Verwendete Bezugszeichen

- 1: Verbundleichtbauplatte
- 2: Basisschicht
- 3: Verbindungsschicht
- 4: Deckschicht
- 5: Strukturstege
- 6: weitere Verbindungsschicht
- 7: weitere Deckschicht
- 8: beheizte Walzen
- 9.1: Vorratsrolle für Deckschicht
- 9.2: Vorratsrolle für Verbindungsschicht
- 9.3: Vorratsrolle für weitere Deckschicht
- 9.4: Vorratsrolle für weitere Verbindungsschicht
- 10: Roh-Verbundleichtbauplatte

## Patentansprüche

1. Verbundleichtbauplatte (1),
aufweisend eine Basisschicht (2), eine Verbindungsschicht (3) und eine Deckschicht (4),
**dadurch gekennzeichnet,**
**dass** die Basisschicht (2) durch ein Leichtbauplattenmaterial ausgebildet wird,
wobei die Deckschicht (4) durch ein CPL-Material ausgebildet wird,
und wobei die Verbindungsschicht (3) durch eine erstarrte Schmelzfolie ausgebildet wird,
wobei die Verbindungsschicht (3) die Basisschicht (2) mit der Deckschicht (4) stoffschlüssig verbindet.

2. Verbundleichtbauplatte (1) nach Anspruch 1,
**dadurch gekennzeichnet,**
**dass** das Leichtbauplattenmaterial als Wabenplatte mit quer zu der Deckschicht angeordneten Strukturstegen (5) ausgebildet ist.

3. Verbundleichtbauplatte (1) nach Anspruch 1 oder 2,
**dadurch gekennzeichnet,**
**dass** die Schmelzfolie eine Perforation aufweist.

4. Verbundleichtbauplatte (1) nach einem der vorhergehenden Ansprüche,
**dadurch gekennzeichnet,**
**dass** die Verbundleichtbauplatte (1) eine weitere Verbindungsschicht (6) und eine weiter Deckschicht (7) aufweist,
wobei die weitere Verbindungsschicht (6) und die weitere Deckschicht (7) an dem Leichtbauplattenmaterial der Basisschicht (2) sowie gegenüberliegend der Verbindungsschicht und der Deckschicht angeordnet sind,
wobei die weitere Deckschicht (7) aus CPL-Material ausgebildet wird,
wobei die weitere Verbindungsschicht (6) durch eine erstarrte Schmelzfolie ausgebildet ist
und wobei die weitere Verbindungsschicht (6) die Basisschicht (2) und die weitere Deckschicht (7) stoffschlüssig verbindet.

5. Verfahren zur Herstellung einer Verbundleichtbauplatte (1),
wobei die Verbundleichtbauplatte eine Basisschicht (2), eine Verbindungsschicht (3) und eine Deckschicht (4) aufweist,
wobei die Basisschicht (2) durch ein Leichtbauplattenmaterial, die Deckschicht (4) durch ein CPL-Material und die Verbindungsschicht (3) durch eine erstarrte Schmelzfolie ausgebildet wird,
wobei die Verbindungsschicht (3) die Basisschicht mit der Deckschicht (4) stoffschlüssig verbindet,
aufweisend folgende Verfahrensschritte:
a) Durchführen eines Rollauftrags der Schmelzfolie auf die Basisschicht (2)
b) Durchführen eines Rollauftrags der Deckschicht (4) auf die rollaufgetragene Schmelzfolie
c) Durchführen einer Wärmebeaufschlagung der Schmelzfolie
d) Durchführen einer flächigen Druckbeaufschlagung
e) Abwarten einer Erstarrung der Schmelzfolie bis zum Eintritt der stoffschlüssigen Verbindung und Erhalt einer Roh-Verbundleichtbauplatte (8) als Endlosmaterial

6. Verfahren zur Herstellung einer Verbundleichtbauplatte (1) nach Anspruch 5, **dadurch gekennzeichnet,**
**dass** in einem Verfahrensschritt f) ein Zuschneiden der Roh-Verbundleichtbauplatte zu der Verbundleichtbauplatte durchgeführt wird.

7. Verfahren zur Herstellung einer Verbundleichtbauplatte (1) nach Anspruch 5 oder 6, **dadurch gekennzeichnet,**
**dass** in einem Verfahrensschritt g) ein Rollauftrag der weiteren Schmelzfolie auf die Basisschicht (2) erfolgt,
**dass** in einem Verfahrensschritt h) ein Durchführung eines Rollauftrag der weiteren Deckschicht (7) auf die rollaufgetragene Schmelzfolie erfolgt und dass in einem Verfahrensschritt i) eine Wärmebeaufschlagung der weiteren Schmelzfolie erfolgt.
